# EUROPEAN PATENT SPECIFICATION

(11) **EP 2 650 863 B1**
(45) Date of publication and mention of the grant of the patent: **28.04.2021**
(21) Application number: 13157758.7
(22) Date of filing: 05.03.2013
(51) Int. Cl.: G09F 9/37

(54) **Display card for transportation system updates**
Anzeigekarte für Transportsystemaktualisierungen
Carte d'affichage pour mises à jour de système de transport

(30) Priority: 12.03.2012 US 201213417921
(43) Date of publication of application: 16.10.2013
(73) Proprietor: Conduent Business Services, LLC, Florham Park, NJ 07932 (US)
(72) Inventor: Stuart, Thomas W, Wellingborough Northamptonshire BA16 0BT (GB); Raja, Asad Khalid, Bristol, BS9 3PS (GB); Mills, Samuel L, Street, Somerset BA16 OBT (GB); Bay, Richard H, Brentwood, Essex CM14 5PD (GB)
(74) Representative: Gill Jennings & Every LLP

(56) References cited:
- EP-A1- 1 677 141
- CN-A- 102 143 285
- JP-A- 2006 323 683
- JP-A- 2008 207 489
- JP-A- 2008 276 435
- US-A1- 2007 045 399

## Description

When using a mass transit system, such as a train system, subway, bus service or air transportation network, it is often difficult for a passenger to obtain network status information that is relevant to the individual passenger. A passenger may be able to view a large board of transport information and see a large amount of status information about the entire network, but determining which information is relevant to the passenger can be confusing and time-consuming.

Some transportation system update services may provide status information to a user's smartphone. Such services may deliver the updates via a text message or through a smartphone application. However, these systems rely on the availability of both a smartphone battery and a cellular signal, and they do not work in places where mobile phone service is patchy and unreliable, such as subway stations.

This document describes methods and systems that may improve the delivery of transportation system updates to passengers in a mass transit system.

EP 1677141 A1 discloses an electrophoretic display device using a liquid phase electrophoretic material not confined in a shell. An electrophoresis chamber with the electrophoretic material hermetically sealing therein mounted in a substrate is disclosed. Also, a display section, a data communication section, a driver section, and a power reception section are mounted on the substrate are disclosed. The data communication section is communicable with an external device to receive data to be displayed in the display section. The driver section is provided for driving the display section. To supply power to various sections of the display device, the power reception section is provided for wirelessly being supplied with power from an external station. JP 2006 323683 A discloses a card device comprising a detecting means for detecting whether the power obtained through an antenna coil has voltage beyond the level for activating the IC card, a charging circuit for charging surplus power to a battery when the supplied power has the voltage beyond the level for activating the IC card, a means for firstly operating communication by the power from the battery when the supplied power has the voltage below the level for activating the IC card depending on the result of the detecting means and a means for displaying the information within the IC card on a display unit after completing the communication, makes the IC card operate communication with the supplied power when the supplied power has the voltage beyond the level for activating the IC card, and has a switching means for charging the surplus power to the battery with the charging circuit.

US 2007/0045399 A1 discloses a transaction card is formed of an electrically-alterable display material. The display may be altered by the application of an external field, without requiring any circuiting on the card. The card also includes an information storage medium, and both the information storage medium and the display may be accessed by a card reader. CN 102 143 285 A discloses a system for receiving transportation system information using a smartphone. JP 2008 207489 A and JP 2008 276435 A disclose IC cards with integrated displays. The type of information displayed on the display screens relates to season tickets, balances etc.

According to the present disclosure, a system for receiving status information, such as information relating to one or more stops or vehicles along a mass transit system, includes a display device, a transaction card and a card reader, as defined in claim 1. The display device includes a display screen that displays system status information, a driving circuit, an antenna, and an inductive coil. When the display device's inductive coil is in the presence of a proximate electromagnetic field and the antenna receives a data signal, the inductive coil delivers power to the driving circuit. In addition, in response to the data signal, the driving circuit causes the display screen to display updated status information.

In some embodiments, the display screen may be a bichromal display device that includes a conductive substrate and a bichromal material positioned over the conductive substrate. In embodiments where the display is a bichromal display, the driving circuit may cause the display screen to display updated status information by inducing a voltage change in a portion of the conductive substrate. The voltage change then causes a corresponding change in an image displayed by the bichromal material to yield the updated status information.

In some embodiments, the system also includes a transaction card having a memory, a transponder and an antenna. The card reader may have an inductive coil that generates the electromagnetic field. The card reader may include a transceiver that generates the data signal. Alternatively, the card reader may be in electronic communication with an external transmitter that generates the data signal.

In some embodiments, the display device may include a battery. If so, the device's inductive coil also may deliver power to the battery when the inductive coil is in the presence of a proximate electromagnetic field. The system also may include a case having at least two receptacles. One receptacle is of a size and shape to receive and hold the display device, while the second receptacle is of a size and shape to receive and hold the transaction card.

The present disclosure relates to, a method of delivering status information (such as transportation system status information) to a user according to claim 8, that includes providing a user with a display device. The device includes a display screen, a driving circuit, an antenna, and a secondary inductive coil. The method includes receiving, via a card reader, an informational signal indicating that the user is located at a transportation stop. In response to receiving the informational signal, the method includes: (i) selecting data that is representative of system status information; (ii) generating a data signal containing the data; and (iii) activating a primary inductive coil to generate an electromagnetic field. When the field is received by the secondary inductive coil, the coil will use the field to power the driving circuit of the display device and cause the display screen to display the system status information. The method also includes providing the user with a transaction card that generates the informational signal.

In some embodiments of the method, the display device may include a bichromal material positioned over a conductive substrate. If so, causing the display screen to display the system status information may include causing a voltage change in a portion of the conductive substrate, such that the voltage change causes the bichromal material to display the system status information.

In some embodiments of the method, selecting the data that is representative of transportation system status information may include receiving system status information for a multiple of vehicles. If so, the method may include selecting a portion of the system status information for delivery to the user and/or delivering a common message to all user displays that the card reader detects within a certain period of time.

Also, in some embodiments when selecting a portion of the system status information for delivery to the user, the method may include accessing a database of user-specific information. Based on the user-specific information, the method may identify system status information that is relevant to the user. Optionally, if the method determines that the system status information that is relevant to the user has a size that exceeds a viewable size of the display device, the method may include prioritizing the system status information that is relevant to the user so that only a prioritized portion of the information appears as the selected information. Optionally, the method may include identifying a home route between the transportation stop and a home location of the user, identifying a transportation interruption corresponding to the home route, identifying an alternate route of travel between the transportation stop and the home location, and causing the display screen to display information corresponding to the alternate route of travel.

### BRIEF DESCRIPTION OF THE DRAWINGS

FIG. 1 shows several illustrative elements of a bichromal display device.
FIG. 2 illustrates a bichromal display device.
FIG. 3 is a block diagram illustrating exemplary elements of a contactless transaction card.
FIG. 4 shows a bichromal display and a transaction card packaged together in card holder.
FIG. 5 shows a contactless transaction card being used in the vicinity of a card reader.
FIG. 6 is a block diagram showing elements of a card reader.
FIG. 7 is a flowchart illustrating steps in a process of providing a user with transportation system updates.

### DETAILED DESCRIPTION

As used in this document, the singular forms "a," "an," and "the" include plural references unless the context clearly dictates otherwise. As used in this document, the term "comprising" means "including, but not limited to."

For the purposes of this document: the word "bichromal" refers to a display or a particle that may exhibit two or more colors. A bichromal material may be modulated by an applied electric or magnetic field. For example, a bichromal bead in an oil-filled capsule may rotate inside the capsule in response to the applied field.

"Electronic communication" refers to any form of electronic sharing of data and/or instructions, including physically connected or wireless communication, as well as communication that is direct or indirect via one or more networks.

A "mass transit system" is a network of vehicles that carries multiple passengers or goods according to a predetermined schedule. As used in this document, a mass transit system may include a public transportation system such as a subway, train or bus system, as well as a private system such as a group of rides in a theme park.

A "vehicle" means a device or structure that transports people or things. Examples include a bus, above-ground or subway train, railcar, airplane, tram, elevator compartment or lift, and other conveyances.

A "transportation stop" is an intermediate or final destination at which a person or vehicle is scheduled to stop or pass through at a scheduled time. Examples of transportation stops may include a bus stop, train station, examination rooms in a medical office, conference attendee meeting rooms and other scheduled locations.

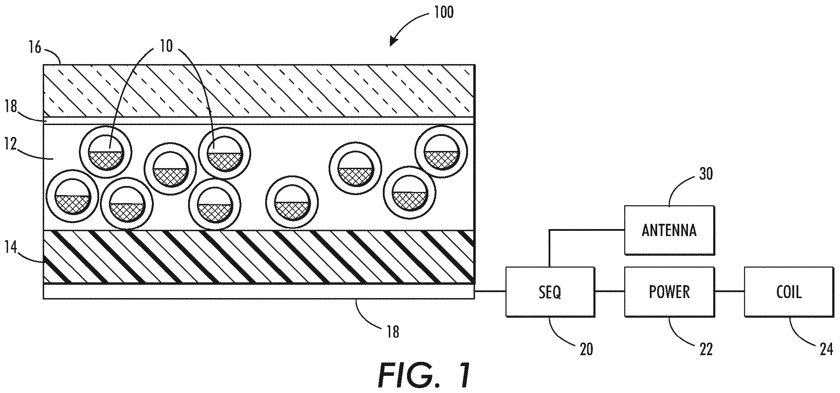

Bichromal displays made of electrophoretic particles or bi-stable inks are known. For example, as shown in cross-section and block diagram form in FIG. 1, a display device 100 may include a bichromal display material 10 such as a group of encapsulated bichromal beads, cylinders, crystals or other bichromal or multichromal particles dispersed in an elastomeric sheet swollen by a fluid 12 and positioned atop a conductive substrate 14, which is typically a printed circuit board or other conductive material. The particles, fluid and substrate are covered with a transparent layer (i.e., a screen) 16 such as glass or plastic and a transparent conductive material such as indium tin oxide (ITO) 18, and they are sealed to form a re-addressable display material in which the particles rotate in response to an electric or magnetic field that is applied to the conductive substrate. Such materials have been described in, for example, U.S. Patent Nos. 4,126,854 to Sheridon and 4,143,103 to Sheridon*.*

The conductive substrate 14 includes or is in electronic communication with control circuitry that provides the voltage signals that generate electric fields in selected locations. Portions of the bichromal material will rotate or otherwise shift in response to the charge, resulting in a change to an image that is viewable through the transparent layer 16. In the embodiments described below, the control circuitry may have a driving circuit 18 such as an array of drive wires, a control sequencer 20, and an antenna 30 that receives data corresponding to text or images that will be displayed on the display in response to activation of the drivers 18 and a control sequencer. An inductive coil 24 receives an inductive charge that is used to power the display. In some embodiments, the display device may include a power supply 22 such as a battery that stores the charge that is received via the inductive coil.

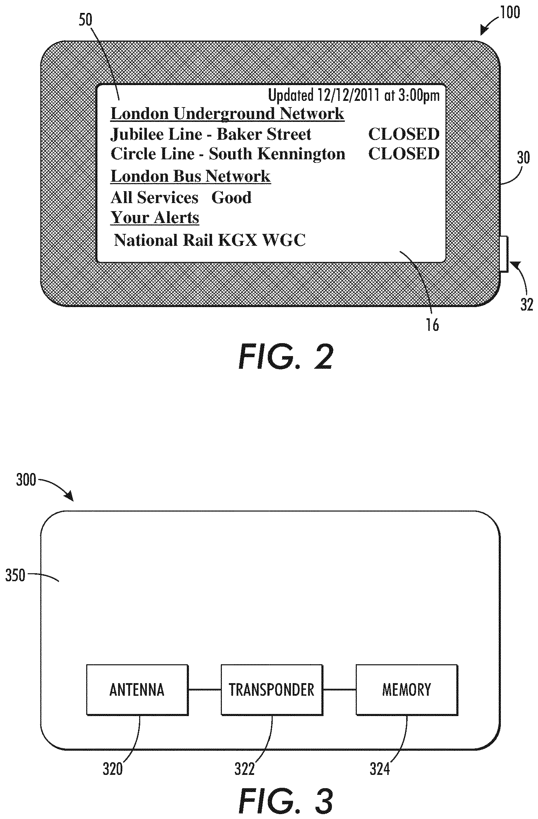

FIG. 2 illustrates an example of the display device of FIG. 1, showing the transparent layer 16 its underlying layers housed within a frame 30. In various embodiments, the device has dimensions that are similar to a typical transaction card -- i.e., about 60 mm × 53.98 mm (about 3.370 in × 2.125 in) -- and the frame is made of a flexible or semi-rigid material such as plastic so that it can be held in a person's pocket, wallet, purse or similar location. Optionally, some the elements shown in FIG. 1, such as the power supply 22 and inductive coil 24, may be housed within the frame 30. Optionally, the frame may include an input device 32, such as a trackball, scroll wheel, one or more buttons, or other input device that a user may touch to cause an action to be taken on the device.

Transaction cards are also common. Transaction cards are typically thin plastic or paper cards in a rectangular shape that include a storage medium on which data can be stored. The cards are typically used for identification, access, or financial transactions. An example of a transaction card is a transit card that stores information that identifies a passenger and/or a passenger's account information, such as available fare data. Another example is an identification card that may be given to a person who enters a secure building, or who has registered to attend various programs in a conference. FIG. 3 is a block diagram showing features of an exemplary transaction card. The card includes a substrate 350 that holds a memory 324 on which data is stored. If the card is a swipe card, then the memory may be a magnetic strip that stores the data. If the card is a contactless card, then the card also may include a transponder 322 and antenna 320 to receive data from or transmit data to an external card reader.

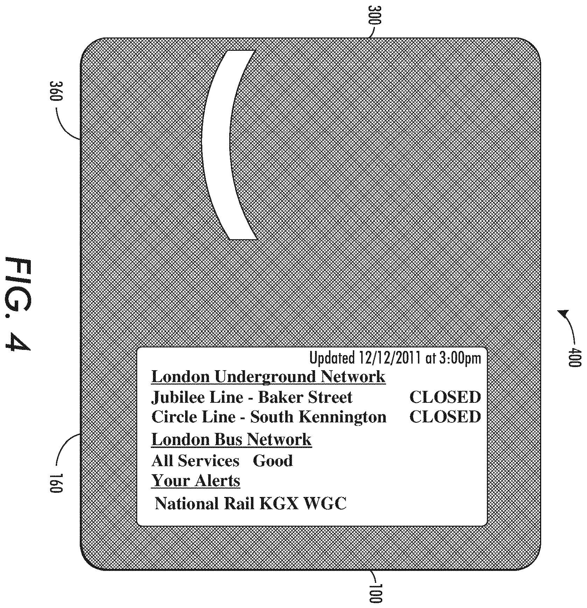

In some embodiments, as shown in FIG. 4, a display 100 and transaction card 300 may be packaged together in card holder 400. The card holder, which may be similar to an existing credit card case, wallet, or similar holder, may have a first receptacle 160 for holding the display 100 and a second receptacle 360 for holding the transaction card 300. Each receptacle will have a size and shape that is appropriate to receive and hold its corresponding item.

In other embodiments, rather than using a separate display and transaction card, the transaction card itself may include the elements of a display such as that shown in FIG. 1. Exemplary transaction cards that include a display area are shown U.S. Patent No. 7,284,708. In addition, while the examples discussed above relate to a bichromal display, other displays may be used. Examples include color super twisted nematic (CSTN) displays, thin film transistor (TFT) displays, thin film diode (TFD) displays, organic light-emitting diode (OLED) displays, capacitive touch screens, and resistive touch screens.

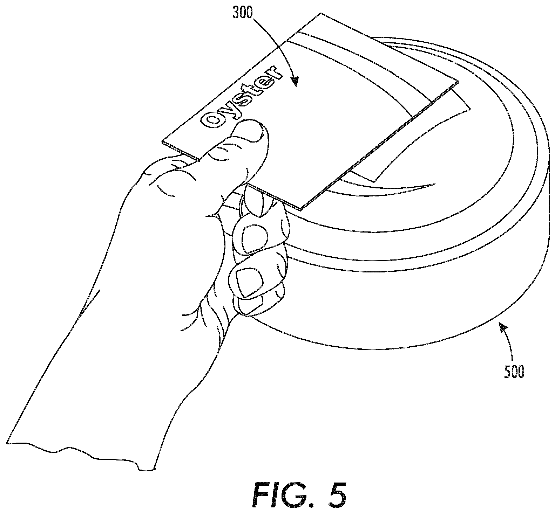

FIG. 5 shows a contactless transaction card 300 being used in the vicinity of a card reader 500. In a contactless system, the card reader 500 and card 300 will transfer data without the need for physical contact. Such systems may use any short range wireless communication technology such as NFC (near field communication), Bluetooth, Bluetooth low energy, radio frequency identification (RFID) or another technology.

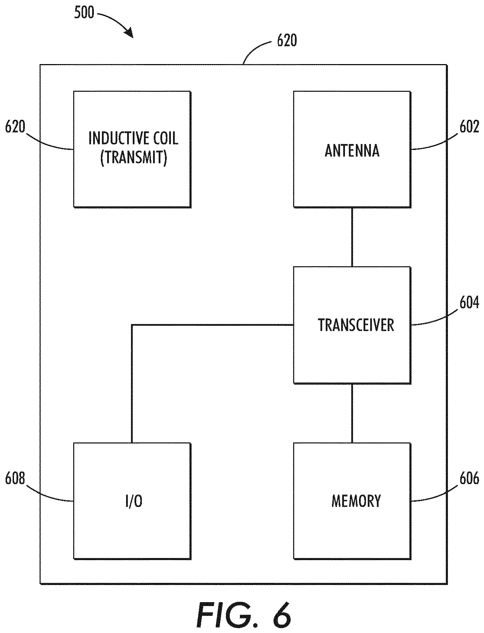

As shown in FIG. 6, the card reader 500 may include an antenna 602 and a transceiver 604. The transceiver 604 causes the transmission of data signals through antenna 602 that can be received by the transaction card 300 and/or display device 100 when placed within range of the card reader antenna's signal. The data signals may correspond to data that is stored in a memory 606, or which the card reader receives from an external source via one or more input ports or input/output ports 608. The card reader 500 also may include an inductive coil 620 that generates an electromagnetic field.

When the display is placed within range of the electromagnetic field, the display's inductive coil (see element 24 in FIG. 1) receives the field and uses the field to power the display device. As used in this document, the card reader coil that generates the field may be referred to as a "primary inductive coil", and the display's coil that receives the field may be referred to as a "secondary inductive coil." A device is "within range" of or "proximate" to the card reader and/or electromagnetic field when it is positioned within a distance of the card reader (or other electromagnetic field source) that will allow it to receive the field and use the field to power the device. In some embodiments where the display device includes a power storage unit such as a battery (see element 22 in FIG. 1), the power storage unit may store some of the charge received via the electromagnetic field to power device operations when the device is not located within range of the card reader. In such embodiments, the device also may be charged by any contactless charging device now or hereafter known to those of skill in the art, such as a charging pad having a primary inductive coil.

When the display device is made of a bichromal material, content that is displayed on the display will remain static and available for viewing when the device is not using any power. However, power may be required only to change the display. Optionally, in embodiments where the device includes a power source such as a battery, the device may include a function that prevents the device from being turned on for more than a threshold period of time if the device does not detect the presence of a mass transit system communication network, an electromagnetic field, or another required criterion. The threshold may be zero, or a short period of time such as 10 seconds, 30 seconds, or a minute, so that the device does not drain its battery when it is not in the presence of a power source or the mass transit system's communication network.

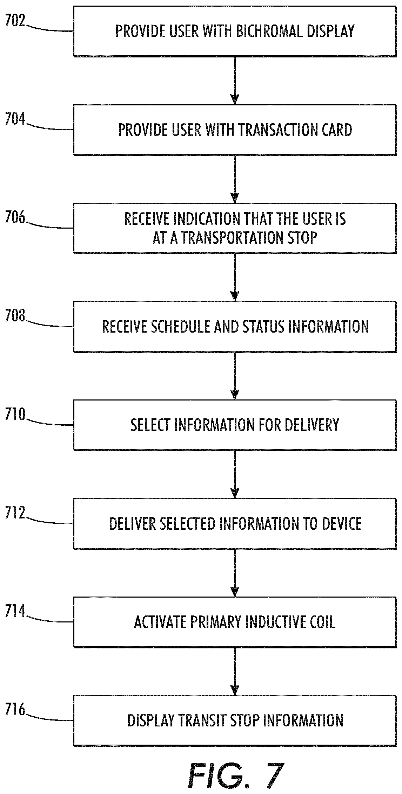

FIG. 7 is a flow diagram illustrating actions that may be taken when the system is in operation. In operation, a user may be provided with a bichromal display device 702 and a transaction card 704. The transportation card may be optional, or the display may be incorporated into the transaction card in some embodiments.

A card reader will receive an informational signal indicating that the user is located at a transportation stop 706. The informational signal may be sent to the card reader by the transaction card and/or the display device. The card reader may include an input/output port that is in communication with a system that contains schedule and status information about multiple transportation stops and, optionally, multiple vehicles. For example, in a mass transit system, the card reader may be in wireless or wired electronic communication with a scheduling system that provides status information for multiple trains, airplanes or other vehicles. The card reader will receive the schedule and status information 708, select a portion of the information for delivery to the user 710, and cause a data signal with the selected transportation stop schedule and status information to be transmitted to the display device 712. Alternatively, the card reader may store the transportation stop schedule and status information in a memory, and it may select the relevant information from the stored information. The memory may be updated on a periodic basis or in response to an incoming communication from an external source.

The card reader also includes an integral or separate primary inductive coil. When the card reader and the display are within a detection range of each other, in response to the informational signal, the card reader will activate the primary inductive coil 714 to generate an electromagnetic field. The display device includes a secondary inductive coil. When the display device's secondary inductive coil senses the field, it will use the field to power a driving circuit of the display device to cause a voltage change that in turn causes the device display the transportation stop status information 716. The electromagnetic field and the data signal may be required to be received simultaneously, or within a short threshold of time (e.g., approximately two minutes or less, approximately one minute or less, approximately thirty seconds or less, or another short period of time). FIG. 2 shows an example of display and status information for a subway and bus system indicating that certain stations on the subway are closed, while all services on the bus service are operating without interruption.

The selection of transportation stop schedule and status information may occur in one of various ways:

In some embodiments, a card reader may deliver a common message to all user displays that it detects within a certain period of time. For example, in FIG. 2, the common message 50 shows that certain train stations that are closed, while no disruptions occur on the bus network.

In other embodiments, a card reader may deliver a common message to all user displays based on the transportation stop or vehicle line with which the reader is associated. For example, the message may show the status of all vehicles that are scheduled to pass through the stop within an upcoming period of time (e.g., 30 minutes, 60 minutes, or another time). As another example, the message may show the status of a particular vehicle or a particular transit route to which the card reader controls access.

In other embodiments, the card reader may determine a user-specific message to display. For example, when the card reader receives the informational signal indicating that the user is located at a transportation stop, the system may access the available schedule and status information that is relevant to the user. Information may be determined as relevant to the user based on the user's known travel plans, based on user preferences that are stored in a database, or based on a user input at the card reader. The known travel plans and user preferences may be obtained from the user's account information for the transportation network. The account information may include records of travel routes purchased by the user, the user's previous routes, or user-selected preferences such as preferred routes and schedules. The account information may be stored on the transaction card, or it may be stored in an external database that is in electronic communication with the card reader via a wireless or wired communication network.

In some embodiments, the card reader may include instructions to deliver the user a "go-home" type feature that determines a route that is required to travel from the user's current location to a transit stop that is designated in the user's account information as the user's "home" stop. The system may check the schedule and status information for the vehicles along the get-me-home route and provide the user with a status information for one or more of those vehicles. Optionally, if any interruptions (such as delays or closures) exist for one or more of the vehicles or lines along the go-home route, the system may determine an alternate go-home route that avoids the delays and interruptions. If so, the system may transmit information about the alternate route to the display device so that the alternate route information is displayed to the user. Optionally, the system may first determine if the alternate route will result in a shorter travel time than the interrupted route before transmitting the alternate route information to the user.

In some embodiments, the card reader itself may include a transmitter that transmits the selected information to the display device. In other embodiments, or in addition, the card reader may transmit the information to an external transmitter or communication signal, which will generate the signal to be sent to the display device.

The size of the user's display may not be sufficient to display all of the selected information. If so, the selected information may be prioritized so that only the most relevant information, or information that has been marked as urgent, appears as the selected information. For example, transportation disruptions that are closest to the card reader's transportation stop, or disruptions along a route that is known to be a preferred route of the user, may be selected as the prioritized material for display,

Alternatively, if the user's display has an input, all selected information may be transmitted to the display so that the user can use the input to scroll or advance through the information. If so, in some embodiments the most relevant or urgent information may appear first, with other information to follow when the user activates the input. Such embodiments would require that the display device include a power source, such a battery or capacitor that stores a charge, so that the user can operate the input when the device is not receiving power from the card reader or another source such as a charging pad.

## Claims

1. A system for receiving transportation system status information, comprising:
a transaction card (300);
a card reader (500);
a display device (100) comprising:
a display screen (16),
a driving circuit (18),
an antenna (30), and
a inductive coil (24);
**characterised in that** in response to the transaction card sending an informational signal to the card reader (500) indicating that a user is located at a transportation stop, when the inductive coil is in the presence of a proximate electromagnetic field generated by the card reader and the antenna receives a data signal from the card reader generated in response to the informational signal, the data signal containing data that is representative of transportation system status information:
the inductive coil delivers power to the driving circuit,
in response to the data signal, the driving circuit causes the display screen to display the data that is representative of transportation system status information.

2. The system of claim 1, wherein the transaction card (300) has a memory (324), a transponder (322), and an antenna (320); and the card reader (500) optionally having an inductive coil (620) that generates the electromagnetic field.

3. The system of claim 2, wherein:
the display device (100) is a bichromal display device that also comprises a conductive substrate (14) and a bichromal material (10) positioned over the conductive substrate, and
the driving circuit (18) is configured to, in response to the data signal, causes a voltage change in a portion of the conductive substrate, wherein the voltage change causes a corresponding change in an image displayed by the bichromal material to yield the updated transportation system status information.

4. The system of any of the preceding claims, wherein the display device (100) further comprises a battery (22), and the inductive coil (24) also delivers power to the battery when the inductive coil is in the presence of a proximate electromagnetic field.

5. The system of any of claims 2 to 4, further comprising a case (400), the case comprising:
a first receptacle (160) that is of a size and shape to receive and hold the display device (100); and
a second receptacle (360) that is of a size and shape to receive and hold the transaction card (300).

6. A system according to claim 1, for delivering information to a user, wherein the inductive coil (24) is
a secondary inductive coil; and the card reader (500) of the system further comprising:
a primary inductive coil (620) and a transmitter (604); wherein
the primary inductive coil generates an electromagnetic field, and the transmitter transmits a data signal, when the reader detects that the display device is within a detection range; and
in response to the generation of the electromagnetic field:
the secondary inductive coil receives the electromagnetic field and delivers power to the driving circuit (18), and
the antenna (30) receives the data signal.

7. The system of claim 14, wherein the display device (100) further comprises a battery (22), and the inductive coil (24) also delivers power to the battery when the inductive coil is in the presence of the proximate electromagnetic field.

8. A method of delivering transportation system status information to a user, comprising:
providing a user with a display device (100), the device comprising a display screen (16), a driving circuit (18), an antenna (30), and a secondary inductive coil (30);
providing the user with a transaction card (300) that generates an informational signal indicating that the user is located at a transportation stop;
receiving, via a card reader (500), the informational signal;
in response to receiving the informational signal;
selecting data that is representative of transportation system status information;
generating a data signal containing the data that is representative of transportation system status information;
activating a primary inductive coil (620) to generate an electromagnetic field that, when received by the secondary inductive coil will power the driving circuit of the display device and cause the display screen to display the data that is representative of transportation system status information.

9. The method of claim 8, wherein:
the display device (100) also comprises a conductive substrate (14) and a bichromal material (10) positioned over the conductive substrate; wherein
the causing the display screen (16) to display the transportation system status information comprises causing a voltage change in a portion of the conductive substrate, wherein the voltage change causes the bichromal material to display the transportation system status information.

10. The method of claim 8 or claim 9, wherein the transaction card (300) includes the display device.

11. The method of any of claims 8 to 10, wherein selecting the data that is representative of transportation system status information comprises:
receiving, from a scheduling system, system status information for a plurality of vehicles; and
selecting a portion of the system status information for delivery to the user.

12. The method of claim 11, wherein selecting the portion of the system status information for delivery to the user comprises:
in response to receiving the informational signal, accessing a database of user-specific information; and
based on the user-specific information, identifying system status information that is relevant to the user.

13. The method of claim 11, wherein selecting the portion of the system status information for delivery to the user also comprises:
determining that the system status information that is relevant to the user has a size that exceeds a viewable size of the display device (100); and
prioritizing the system status information that is relevant to the user so that only a prioritized portion of the relevant system status information appears as the selected information.

14. The method of any of claims 8 to 13, wherein selecting the data that is representative of transportation system status information comprises:
receiving, from a scheduling system, system status information for a plurality of vehicles; and
delivering a common message to all user displays that the card reader detects within a certain period of time.

15. The method of any of claims 8 to 14, wherein:
identifying system status information that is relevant to the user comprises:
identifying a home route between the transportation stop and a home location of the user,
identifying a transportation interruption corresponding to the home route,
identifying an alternate route of travel between the transportation stop and the home location; and
the method also includes causing display screen (16) to display information corresponding to the alternate route of travel.

## Patentansprüche

1. System zum Empfangen von Statusinformation des Transportsystems, umfassend:
Eine Transaktionskarte (300);
ein Kartenlesegerät (500);
ein Anzeigegerät (100), umfassend:
Einen Bildschirm (16),
einen Antriebskreis (18),
eine Antenne (30), und
eine induktive Spule (24);
**dadurch gekennzeichnet, dass**,
als Reaktion darauf, dass die Transaktionskarte ein Informationssignal an das Kartenlesegerät (500) sendet, welches anzeigt, dass sich ein Benutzer an einer Transporthaltestelle befindet, wenn sich die induktive Spule in Gegenwart eines nahen elektromagnetischen Felds befindet, das vom Kartenlesegerät generiert wird und die Antenne ein Datensignal vom Kartenlesegerät empfängt, das als Reaktion auf das Informationssignal generiert wurde, wobei das Datensignal Daten enthält, die repräsentativ für Statusinformation des Transportsystems sind:
Die induktive Spule Strom zum Antriebskreis liefert,
als Reaktion auf das Datensignal, der Antriebskreis bewirkt, dass der Bildschirm Daten anzeigt, die repräsentativ für Statusinformation des Transportsystems sind.

2. System nach Anspruch 1, wobei die Transaktionskarte (300) einen Speicher (324), einen Transponder (322) und eine Antenne (320) aufweist; und das Kartenlesegerät (500) optional eine induktive Spule (620) aufweist, die das elektromagnetische Feld generiert.

3. System nach Anspruch 2, wobei:
Das Anzeigegerät (100) ein zweifarbiges Anzeigegerät ist, das außerdem ein leitfähiges Substrat (14) und ein zweifarbiges Material (10) umfasst, das über dem leitfähigen Substrat positioniert ist, und
der Antriebskreis (18) ausgelegt ist, als Reaktion auf das Datensignal, eine Spannungsänderung in einem Abschnitt des leitfähigen Substrats zu bewirken, wobei die Spannungsänderung eine entsprechende Änderung in einem Bild bewirkt, das vom zweifarbigen Material angezeigt wird, um die aktualisierte Statusinformation des Transportsystems zu liefern.

4. System nach irgendeinem der vorhergehenden Ansprüche, wobei das Anzeigegerät (100) ferner eine Batterie (22) umfasst, und die induktive Spule (24) außerdem Strom zur Batterie liefert, wenn sich die induktive Spule in der Gegenwart eines nahen elektromagnetischen Felds befindet.

5. System nach irgendeinem der Ansprüche 2 bis 4, das ferner ein Gehäuse (400) umfasst, wobei das Gehäuse umfasst:
Ein erstes Behältnis (160), das einer Größe und Form ist, um das Anzeigegerät (100) aufzunehmen und zu halten; und
ein zweites Behältnis (360), das einer Größe und Form ist, um die Transaktionskarte (300) aufzunehmen und zu halten.

6. System nach Anspruch 1 zur Lieferung von Information an einen Benutzer, wobei die induktive Spule (24) eine sekundäre induktive Spule ist; und
das Kartenlesegerät (500) des Systems ferner umfasst:
Eine primäre induktive Spule (620) und einen Sender (604); wobei
die primäre induktive Spule ein elektromagnetisches Feld generiert und der Sender ein Datensignal sendet, wenn das Lesegerät detektiert, dass sich das Anzeigegerät innerhalb eines Erfassungsbereichs befindet; und
als Reaktion auf die Generierung des elektromagnetischen Felds:
Die sekundäre induktive Spule das elektromagnetische Feld empfängt und Strom zum Antriebskreis (18) liefert, und
die Antenne (30) das Datensignal empfängt.

7. System nach Anspruch 14, wobei das Anzeigegerät (100) ferner eine Batterie (22) umfasst, und die induktive Spule (24) außerdem Strom zur Batterie liefert, wenn sich die induktive Spule in der Gegenwart des nahen elektromagnetischen Felds befindet.

8. Verfahren zur Lieferung von Statusinformation des Transportsystems an einen Benutzer, umfassend:
Versehen eines Benutzers mit einem Anzeigegerät (100), wobei das Gerät einen Bildschirm (16), einen Antriebskreis (18), eine Antenne (30) und eine sekundäre induktive Spule (30) umfasst;
Versehen eines Benutzers mit einer Transaktionskarte (300), die ein Informationssignal generiert, das anzeigt, dass sich der Benutzer an einer Transporthaltestelle befindet;
Empfangen des Informationssignals über das Kartenlesegerät (500);
als Reaktion auf den Empfang des Informationssignals;
Selektieren von Daten, die repräsentativ für die Statusinformation des Transportsystems sind;
Generieren eines Datensignals, das Daten enthält, die repräsentativ für Statusinformation des Transportsystems sind;
Aktivieren einer primären induktiven Spule (620), um ein elektromagnetisches Feld zu generieren, das, wenn von der sekundären induktiven Spule empfangen, den Antriebskreis mit Strom versorgen und bewirken wird, dass der Bildschirm die Daten anzeigt, die repräsentativ für die Statusinformation des Transportsystems sind.

9. Verfahren nach Anspruch 8, wobei:
Das Anzeigegerät (100) außerdem ein leitfähiges Substrat (14) und ein zweifarbiges Material (10) umfasst, das über dem leitfähigen Substrat positioniert ist, wobei
die Verursachung, dass der Bildschirm (16) die Statusinformation des Transportsystems anzeigt, eine Spannungsänderung in einem Abschnitt des leitfähigen Substrats bewirkt, wobei die Spannungsänderung bewirkt, dass das zweifarbige Material die Statusinformation des Transportsystems anzeigt.

10. Verfahren nach Anspruch 8 oder Anspruch 9, wobei die Transaktionskarte (300) das Anzeigegerät einschließt.

11. Verfahren nach irgendeinem der Ansprüche 8 bis 10, wobei das Selektieren der Daten, die repräsentativ für die Statusinformation des Transportsystems sind, umfasst:
Empfangen, von einem Planungssystem, von Statusinformation des Systems für eine Vielzahl von Fahrzeugen; und
Selektieren eines Teils der Statusinformation des Systems zur Lieferung an den Benutzer.

12. Verfahren nach Anspruch 11, wobei das Selektieren des Teils der Statusinformation des Systems zur Lieferung an den Benutzer umfasst:
Als Reaktion auf den Empfang des Informationssignals, Zugreifen auf eine Datenbank von benutzerspezifischen Information; und
auf Basis der benutzerspezifischen Information, Identifizieren von Statusinformation des Systems, die für den Benutzer relevant ist.

13. Verfahren nach Anspruch 11, wobei das Selektieren des Teils der Statusinformation des Systems zur Lieferung an den Benutzer außerdem umfasst:
Ermitteln, dass die Statusinformation des Systems, die für den Benutzer relevant ist, eine Größe aufweist, die eine sichtbare Größe des Anzeigegeräts (100) überschreitet; und
Priorisieren der Statusinformation des Systems, die für den Benutzer relevant ist, sodass nur ein priorisierter Teil der relevanten Statusinformation des Systems als die selektierte Information erscheint.

14. Verfahren nach irgendeinem der Ansprüche 8 bis 13, wobei das Selektieren der Daten, die repräsentativ für die Statusinformation des Transportsystems sind, umfasst:
Empfangen, von einem Planungssystem, von Statusinformation des Systems für eine Vielzahl von Fahrzeugen; und
Lieferung einer gemeinsamen Nachricht an alle Benutzeranzeigen, welche das Kartenlesegerät innerhalb einer gewissen Zeitspanne detektiert.

15. Verfahren nach einem der Ansprüche 8 bis 14, wobei:
Das Identifizieren von Statusinformation des Systems, die für den Benutzer relevant ist, umfasst:
Identifizieren einer Route nach Hause zwischen der Transporthaltestelle und einem Heimatort des Benutzers,
Identifizieren einer Transportunterbrechung, die der Route nach Hause entspricht,
Identifizieren einer alternativen Fahrstrecke zwischen der Transporthaltestelle und dem Heimatort; und
das Verfahren außerdem das Bewirken einschließt, dass der Bildschirm (16) Information anzeigt, die der alternativen Fahrstrecke entspricht.

## Revendications

1. Un système de réception d'informations sur le statut d'un système de transport, et ce système se compose des éléments suivants :
une carte de transactions (300)
un lecteur de carte (500)
un dispositif d'affichage (100) composé des éléments suivants :
un écran d'affichage (16)
un circuit de transmission (18)
une antenne (30) et
une bobine inductrice (24)
et **se caractérisant par le fait que** :
en réponse à l'envoi par la carte de transaction d'un signal informationnel destiné au lecteur de carte (500) pour indiquer qu'un utilisateur se trouve à un arrêt de transport, lorsque la bobine inductrice est en présence d'un champ électromagnétique de proximité produit par le lecteur de carte et lorsque l'antenne reçoit un signal de données en provenance du lecteur de carte et produit en réponse au signal informationnel, et ce signal de données contient des données qui sont représentatives des informations sur le statut du système de transport :
la bobine inductrice fournit un courant au circuit de transmission
en réponse à ce signal de données, le circuit de transmission entraîne l'affichage, sur l'écran d'affichage, de données qui sont représentatives des informations sur le statut du système de transport.

2. Le système que décrit la revendication 1, si ce n'est que la carte de transaction (300) a une mémoire (324), un transpondeur (322) et une antenne (320) et que le lecteur de carte (500) a, en option, une bobine inductrice (620) qui produit le champ magnétique.

3. Le système que décrit la revendication 2, si ce n'est que :
le dispositif d'affichage (100) est un dispositif d'affichage bicolore qui comporte également une couche de base conductrice (14) et un matériau bicolore (10) qui vient se positionner sur la surface conductrice de base et
le circuit de transmission (18) est configuré, en réponse au signal de données, pour provoquer un changement de tension dans une partie de la couche conductrice de base, et ce changement de tension entraîne un changement correspondant dans une image affichée par le matériau bicolore, pour y intégrer les informations actualisées portant sur le statut du système de transport.

4. Le système que décrit l'une ou l'autre des revendications précédentes, si ce n'est que le dispositif d'affichage (100) comporte, en outre, une batterie (22) et que la bobine inductrice (24) fournit aussi un courant à la batterie lorsque la bobine inductrice est en présence d'un champ électromagnétique de proximité.

5. Le système que décrit l'une ou l'autre des revendications 2 à 4, si ce n'est qu'il comporte, en outre, un coffret (400), et que ce coffret se compose des éléments suivants :
un premier réceptacle (160) dont la taille et le profil lui permettent de recevoir et maintenir en place le dispositif d'affichage (100) et
un deuxième réceptacle (360) dont la taille et le profil lui permettent de recevoir et maintenir en place la carte de transaction (300).

6. Le système que décrit la revendication 1, et qui est conçu pour fournir des informations à un utilisateur, si ce n'est que la bobine inductrice (24) est
une bobine inductrice secondaire et que le lecteur de carte (500) de ce système comporte, en outre, les éléments suivants :
une bobine inductrice primaire (620) et un transmetteur (604), et si ce n'est que :
cette bobine inductrice primaire produit un champ électromagnétique alors que ce transmetteur transmet un signal de données lorsque ce lecteur détecte que le dispositif d'affichage se trouve dans une plage directionnelle et,
en réponse au champ électromagnétique ainsi produit :
la bobine inductrice secondaire reçoit ce champ électromagnétique et fournit un courant au circuit de transmission (18), et
l'antenne (30) reçoit ce signal de données.

7. Le système que décrit la revendication 14, si ce n'est que le dispositif d'affichage (100) comporte, en outre, une batterie (22), et que la bobine inductrice (24) fournit également un courant à la batterie lorsque la bobine inductrice se trouve en présence du champ électromagnétique de proximité.

8. Un procédé conçu pour fournir des informations sur le statut d'un système de transport à un utilisateur et composé des éléments suivants :
la fourniture à un utilisateur d'un dispositif d'affichage (100), et ce dispositif se compose d'un écran d'affichage (16), d'un circuit de transmission (18), d'une antenne (30) et d'une bobine inductrice secondaire (30)
la fourniture à l'utilisateur d'une carte de transaction (300) qui produit un signal informationnel indiquant que l'utilisateur se trouve à un arrêt de transport
la réception du signal informationnel, par le biais d'un lecteur de carte (500) en réponse à la réception de ce signal informationnel :
la sélection de données qui sont représentatives d'informations sur le statut du système de transport
la production d'un signal de données qui contient des données qui sont représentatives d'informations sur le statut du système de transport
l'activation d'une bobine inductrice (620) primaire de production d'un champ électromagnétique qui, lors de sa réception par la bobine inductrice secondaire, va fournir un courant au circuit de transmission du dispositif d'affichage et l'affichage, par l'écran d'affichage, des données qui sont représentatives d'informations sur le statut du système de transport.

9. Le procédé que décrit la revendication 8, si ce n'est que :
le dispositif d'affichage (100) comporte également une surface conductrice de base (14) et un matériau bicolore (10) qui vient se positionner sur la surface conductrice de base et
que cela entraîne l'affichage par l'écran d'affichage (16) d'informations sur le statut du système de transport et que cela provoque un changement de tension dans une partie de la surface conductrice de base, et ce changement de tension entraîne l'affichage par le matériau bicolore d'informations sur le statut du système de transport.

10. Le procédé que décrit la revendication 8 ou 9, si ce n'est que la carte de transaction (300) contient le dispositif d'affichage.

11. Le procédé que décrit l'une ou l'autre des revendications 8 à 10, si ce n'est que la sélection de données qui sont représentatives d'informations sur le statut du système de transport se compose des éléments suivants :
la réception, en provenance d'un système de programmation des horaires, d'informations portant sur le statut du système et destinées à une pluralité de véhicules et
la sélection d'une partie des informations sur le statut du système en vue de les communiquer à l'utilisateur.

12. Le procédé que décrit la revendication 11, si ce n'est que la sélection de la partie des informations sur le statut du système, en vue de les transmettre à l'utilisateur, se compose des éléments suivants :
en réponse à la réception du signal informationnel, l'accès à une banque de données contenant des informations spécifiques pour l'utilisateur et
en se basant sur des informations spécifiques pour l'utilisateur, l'identification d'informations sur le statut du système qui sont pertinentes en ce qui concerne l'utilisateur.

13. Le procédé que décrit la revendication 11, si ce n'est que la sélection de la partie des informations sur le statut du système, en vue de les transmettre à l'utilisateur, comprend également :
la détermination que les informations sur le statut du système, qui sont pertinentes en ce qui concerne l'utilisateur, ont une taille qui dépasse la taille qui peut être vue sur le dispositif d'affichage (100) et
l'établissement d'une priorité pour les informations sur le statut du système, qui s'avèrent pertinentes en ce qui concerne l'utilisateur, de telle sorte que seule une partie prioritaire des informations sur le statut du système pertinent apparaisse en tant qu'informations sélectionnées.

14. Le procédé que décrit l'une ou l'autre des revendications 8 à 13, si ce n'est que la sélection des données qui sont représentatives des informations sur le statut du système de transport contiennent :
la réception, en provenance d'un système de programmation des horaires, d'informations sur le statut du système pour une pluralité de véhicules, et
la fourniture d'un message commun à tous les affichages des utilisateurs que le lecteur de carte détecte pendant une certaine période.

15. Le procédé que détecte l'une ou l'autre des revendications 8 à 14, si ce n'est que :
l'identification des informations sur le statut du système qui sont pertinentes en ce qui concerne l'utilisateur, comprennent :
l'identification d'un parcours pour se rendre à son domicile, entre l'arrêt de transport et un emplacement qui correspond au domicile de l'utilisateur
l'identification d'une interruption de parcours qui correspond au parcours pour se rendre au domicile
l'identification d'un autre parcours entre l'arrêt de transport et l'emplacement qui correspond au domicile et
ce procédé comporte également l'élément qui entraîne l'affichage, par l'écran d'affichage (16), d'informations qui correspondent à cet autre parcours.
